Europäisches Patentamt

European Patent Office

Office européen des brevets

(19)

(11) Publication number: **0 179 255**

A1

# (12) EUROPEAN PATENT APPLICATION

(21) Application number: **85111583.2**

(22) Date of filing: **13.09.85**

(51) Int. Cl.⁴: **F 16 D 55/224**

(30) Priority: **25.10.84 US 664824**

(43) Date of publication of application:
**30.04.86 Bulletin 86/18**

(84) Designated Contracting States:
**DE FR GB IT**

(71) Applicant: **ALLIED CORPORATION**
**Columbia Road and Park Avenue P.O. Box 2245R (Law Dept.)**
**Morristown New Jersey 07960(US)**

(72) Inventor: **Ritsema, Irving Ray ALLIED CORPORATION**
**Law Dep. (Patent) 401 Bendix Drive P.O.Box 4001**
**South Bend Indiana 46634(US)**

(74) Representative: **Brullé, Jean et al,**
**Service Brevets Bendix 44, rue François 1er**
**F-75008 Paris(FR)**

(54) **Disc brake.**

(57) A disc brake assembly (10) comprising a torque member (12) having end overlying portions (16) extending over the circumference of a disc (14) and joined by a connecting portion (18). The end overlying portions (16) have torque arms (20) providing support for a pair of friction pads (26, 28), the pads (26, 28) being disposed within a central aperture (24) between the torque arms (20). A caliper assembly (50) is slidably supported upon a pair of pins (46) fixedly received by the torque member (12), and includes end bridges (54) extending over the circumference of the disc (14) to provide support for a reaction side (56) located on the opposite side of the disc (14). A central opening (58) of the caliper assembly (50) is aligned with the central aperture (24). The caliper assembly (50) is shaped complementary to the torque member (12) such that it overlies and encompasses the torque member, whereby the size of the entire disc brake assembly is reduced. The friction pads may be removed by displacement through the aligned central aperture (24) and central opening (58), without disturbing the pins (46) or caliper assembly (50).

FIG. I

### DISC BRAKE

This invention relates to a disc brake wherein the torque member includes a pair of end overlying portions which overlie the disc and provide support for brake pads disposed on both sides of the disc, and a caliper assembly slidably supported by pins attached to the torque member and including an actuation side, a pair of end bridges, and a reaction side, shaped complementary to corresponding portions of the torque member such that the friction pads may be mounted or removed without removal of the pins.

In a pin slider disc brake, such as the disc brake illustrated in Nakasu et al. U.S. Patent 4,392,560 issued July 12, 1963, pins slidably support a caliper assembly, the pins being fixedly received by the torque member. The caliper member typically overlies a portion of the torque member, and in order for the friction pads to be removed, some of the pins must be removed so that either the caliper assembly can be rotated about other pins or all the pins removed so that the entire caliper assembly can be removed and then the friction pads replaced. The torque member and associated caliper assembly cover a large circumferential area of the disc because each component is disposed adjacent one another. These disc brake designs result in heavier disc brake assemblies because of the larger structures, and occupy a larger area adjacent the disc and thus require more space.

The present invention provides a disc brake assembly comprising a torque member having a side member with pin receiving means, the side member connected to end overlying portions at the circumferential extremities of the side member and which overlie the disc, each end overlying portion terminating in a torque arm having a pad support surface, a caliper assembly including an actuation side slidably received on a pair of pins received by the pin receiving means of the torque member, a hydraulic actuator for biasing directly one of the friction pads into frictional engagement with the disc, and a pair of end bridges located at the extremities of the actuation side and extending over the top of the disc to connect with a reaction side disposed on the other side of the disc to provide support for the friction pad located on the other side of the disc. The torque member has a central aperture receiving the friction pads therein with the pads supported by the torque arms, the caliper assembly having a central opening aligned with the central aperture of the torque member. The friction pads are removable radially outwardly through the aligned central aperture and central opening, all without displacement of the pins or caliper assembly.

The disc brake assembly of the present invention provides a substantial saving in the amount of circumferential space occupied by the disc brake assembly because the end bridges and reaction side of the caliper assembly are shaped complementary to the end overlying portions and a connecting portion of the torque member, such that the caliper member substantially overlies and encompasses the torque member. The reduction in space occupied by the disc brake is accompanied by a corresponding reduction in weight. The friction pads are supported by keys slidably received on the torque arms, the keys being slidably displacable in opposite directions so that the friction pads may be removed without removing the keys from the torque arms. Each key has an axial length longer than an associated pad support surface of the torque arm to provide an additional savings in weight by the minimization of the size of each torque arm and pad support surface. A connection portion between the end overlying portions of the torque member performs as a tie-bar whereby braking force received by one torque arm is distributed to the other torque arm. The transfer of braking force reduces bending and lowers stresses imposed upon the torque member.

One way of carrying out the invention is described in detail below with reference to the drawings which illustrate an embodiment, in which:

Figure 1 is a side view of the disc brake assembly of the present invention;

Figure 2 is a partial cut-away top view of the disc brake assembly of the present invention;

Figure 3 is an enlarged partial cut-away side view of the torque member and friction pads of the present invention; and

Figure 4 is an anti-noise spring used in the present invention.

The disc brake assembly is designated generally by reference numeral 10. Disc brake assembly 10 includes a torque member 12 fixedly attached to a vehicle (not shown) and disposed on one side of a disc 14, and includes a pair of oppositely disposed end overlying portions 16 located at the circumferential extremities of torque member 12. Each end overlying portion 16 extends over disc 14 to overlie the circumference of the disc and extends axially to meet with a connection portion 18. Connection portion 18 is disposed on the side of disc 14 opposite the torque member 12. Connection portion 18 connects together the end overlying portions 16 which each terminate in a torque arm 20. Each torque arm 20 extends circumferentially toward the other and includes a pad support surface 22. Torque arms 20 and pad support surfaces 22 define therebetween a central aperture 24 receiving therein friction pads 26 and 28. Friction pads 26, 28 include linings 30 and 32, respectively, which have end openings 34 for mounting the pads to the torque arms. Each pad support surface 22 receives a C-shaped key 40 slidable axially therealong. Keys 40 are received within complementary shaped end openings 34 of linings 30 and 32. Each key 40 has end pins 42 extending through the key to prevent axial movement of the key when both pins 42 are in place.

Torque member 12 includes pin receiving openings 44 fixedly receiving slider pins 46. Each pin 46 is slidably received within a pin opening 48 located within an actuation side 52 of caliper assembly 50. The caliper assembly 50 is slidably supported by pins 46 and includes a hydraulic actuator assembly 60 located within caliper assembly 50. Caliper assembly 50 includes end bridges 54 located at the circumferential extremities of actuation side 52, and which provide support for a reaction side 56. Reaction side 56 engages lining 30 of outer friction pad 26 in order to bias friction pad 26 into engagement with the disc when actuator assembly 60 operates. Actuation side 52, end bridges 54, and reaction side 56 define a central opening 58 which is aligned radially and circumferentially with central aperture 24 of torque member 12.

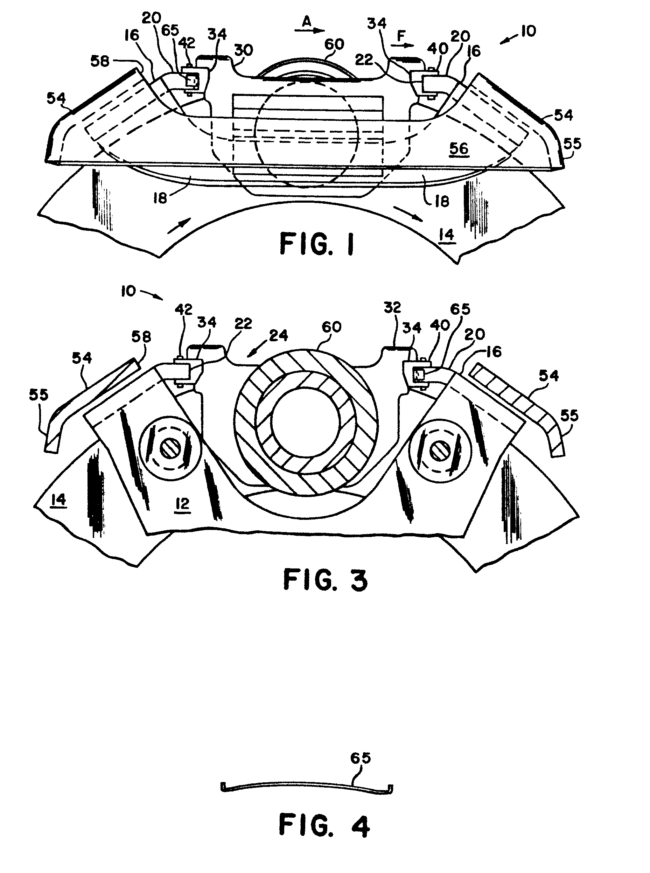

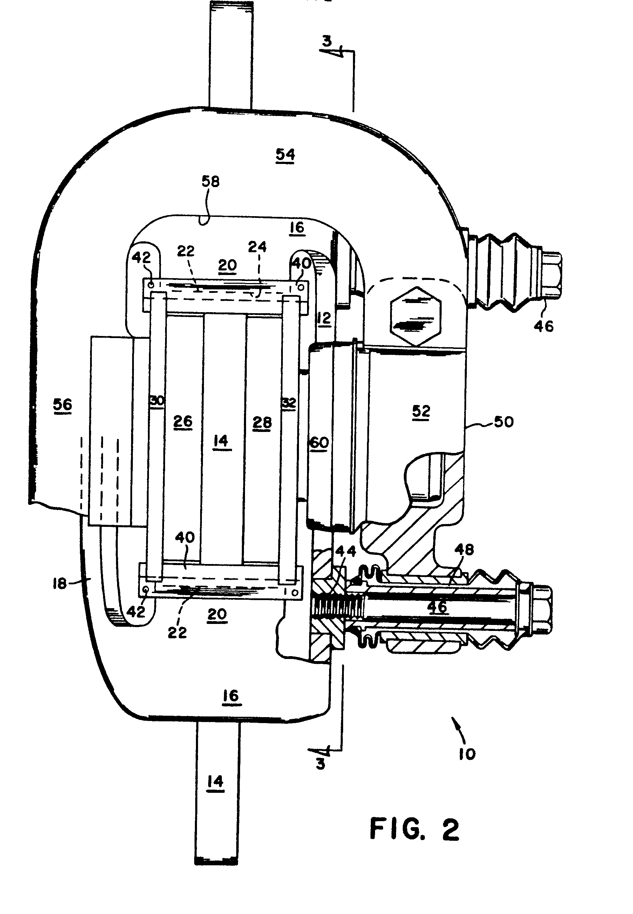

The disc brake assembly of the present invention operates by communicating pressurized brake fluid to hydraulic actuator assembly 60 which expands to bias inner friction pad 28 into engagement with the associated side of disc 14. The reaction force of this engagement causes caliper assembly 50 to slide axially along pins 46 whereby reaction side 56 is displaced axially in the same direction to bias friction pad 26 into engagement with the opposite side of disc 14. As the friction pads 26 and 28 engage the rotating disc 14 to retard rotation of the disc, the braking force causes the friction pads to move circumferentially in the direction of arrow A (see Figure 1) and exert braking force F upon the associated key 40, torque arm 20, and end overlying portion 16. The braking force F is distributed to the other torque arm by means of connection portion 18 which functions as a tie-bar to distribute braking force throughout torque member 12.

When friction pads 26 and 28 have worn sufficiently to warrant removal and replacement, pins 42 are removed from at least one of the keys 40. The key is then slidably displaced in an axial direction so that the associated end opening 34 of a brake lining may be disengaged from the key. The friction pad and associated lining are tilted and then removed radially outwardly through central aperture 24 and central opening 58. The key 40 is then moved axially in the opposite direction in order to release the end opening 34 of the other friction pad and lining, so that the other pad and lining may be removed radially through central aperture 24 and central opening 58. Alternatively, the keys 40 may be simply removed completely through axial displacement from their associated torque arms, so that the pads may be removed through the central aperture and central opening.

Spring member 65 is disposed between at least one of the pad support surfaces 22 and the associated key 40 so that a light load is exerted against the friction pads to eliminate rattle and noise during braking application. Because of the lighter weight structure enabled by the present invention, the torque plate may comprise a steel stamping or a lightweight casting. The steel stamping requires less material than a cast metal material, and this results in a substantial savings in both weight and fabrication costs.

The disc brake of the present invention provides substantial advantages in savings of weight and space occupied. Because the caliper assembly is shaped complementary to the torque member and overlies and substantially encompasses the torque member, the overall space occupied along the circumference of the disc is effectively reduced, and accordingly reduces the size and weight of the caliper assembly and torque member. Each end bridge of the caliper assembly includes a trailing edge 55 which extends downwardly and over the circumferential extremity of the associated end overlying portion 16, to provide a protective cover and an enlarged area for supporting reaction side 56, which increases the stiffness of the caliper and reduces the amount of bending that might occur. Most importantly, pin slider disc brakes normally require that at least one of the pins be removed in order for the friction pads to be replaced. One of the pins must be removed in order for the caliper assembly to be rotated about the other pin and the friction pads removed, or in many cases both pins must be removed so that the entire caliper assembly can be lifted from the brake assembly and the friction pads replaced.

The present invention eliminates a substantial amount of time and work by simplifying friction pad removal procedure whereby the friction pads are removed directly through the aligned central aperture and central opening of the torque member and caliper assembly. Each key 40 has a pair of end pins 42 which may be removed so that either the keys can be slidably displaced axially along the associated pad support surfaces, allowing the friction pads to be removed from the central aperture, or the keys 40 may be removed completely from the caliper assembly so that the friction pad assemblies can be removed and replaced.

Although this invention has been described in connection with the illustrated embodiment, it will be obvious to those skilled in the art that various changes may be made in the form, structure, and arrangement of parts without departing from the invention.

**0179255**

-7-

CLAIMS

1. A disc brake (10), comprising a caliper assembly (50) cooperating with a pair of friction pads (26, 28) to selectively engage the friction pads (26, 28) with a disc (14) to be braked and the caliper assembly (50) being adapted for axial movement relative to a torque member (12) during braking, the torque member (12) comprising a side member having pins (46) coupled thereto, end overlying portions (16) at the circumferential extremities thereof and extending over the disc (14) and providing torque arms (20) disposed over said disc (14) and extending circumferentially towards one another, the torque arms (20) spaced apart to form a central aperture (24) and receiving and supporting said friction pads (26, 28), characterized in that the caliper assembly (50) comprises an actuation side (52) having openings (48) slidably receiving the pins (46) and a hydraulic actuator (60) operable to engage directly one (28) of the pair of friction pads (26, 28) with the disc (14) and impart axial movement to the caliper assembly (50), a reaction side (56) on the other side of the disc (14) for urging the other friction pad (26) into engagement with the disc (14), and a pair of end bridges (54) at the circumferential extremities of the caliper assembly (50) and extending over the disc (14) in order to connect the actuation side (52) with the reaction side (56), the actuation side (52), reaction side (56), and end bridges (54) forming the perimeter of a central opening (58) aligned radially and circumferentially with said central aperture (24), the caliper assembly (50) overlying said torque member (12) such that said torque member (12) is substantially covered by and disposed beneath said caliper assembly (50).

2. The disc brake (10) in accordance with claim 1, characterized in that the brake (10) comprises keys (40) received on said torque arms (20) and supporting said friction pads (26, 28).

3. The disc brake (10) in accordance with claim 2, characterized in that the brake (10) comprises resilient means (65) disposed between a torque arm (20) and key (40) in order to eliminate noise.

4. The disc brake (10) in accordance with claim 2, characterized in that the torque arms (20) further comprise pad support surfaces (22) with each key (40) slidable along an associated pad support surface (22), one key (40) being axially displacable in order to release the friction pads (26, 28) for removal through said central aperture (24) and central opening (58).

5. The disc brake (10) in accordance with claim 4, characterized in that the brake (10) comprises pin means (42) extending through said one key (40) in order to prevent axial movement of said keys (40).

6. The disc brake (10) in accordance with claim 1, characterized in that the brake (10) comprises a connection portion (18) extending between the end overlying portions of said torque member (12) and disposed on the side of the disc (14) opposite from said side member, the connection portion (18) effecting the distribution of braking force between the torque arms (20).

7. The disc brake (10) in accordance with claim 1, characterized in that each end bridge (54) includes a trailing edge (55) extending circumferentially away from said central opening (58) and angled radially inwardly in order to provide an overlapping covering portion (55) over the associated end overlying portion (16) of the torque member (12).

8. The disc brake (10) in accordance with claim 1, characterized in that each torque arm (20) includes a pad support surface (22) receiving a key (40) for slidable engagement therewith.

9. The disc brake (10) in accordance with claim 8, characterized in that each of said friction pads (26, 28) includes openings (34) corresponding to the shape of said keys (40), the keys (40) being axially slidable so that said friction pads (26, 28) may be introduced or removed through said central aperture (24).

10. The disc brake (10) in accordance with claim 8, characterized in that each of said keys (40) is substantially C-shaped in order to encompass and receive therein an associated pad support surface (22).

11. The disc brake (10) in accordance with claim 1, characterized in that said friction pads (26, 28) are introduced or removed through the aligned central aperture (24) and central opening (58) without removal of said pins (46) or displacement of said caliper assembly (50).

1/2

**FIG. 1**

**FIG. 3**

**FIG. 4**

FIG. 2

# EUROPEAN SEARCH REPORT

EP  85 11 1583

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 308 016  (TOKICO)<br>* Page 2, line 19 - page 3, line 20; figures 1-3 *<br><br>--- | 1,6,11 | F 16 D  55/224 |
| A | EP-A-0 080 949  (DBA)<br>* Page 2, lines 17-22; figures 1,2 *<br><br>--- | 2 | |
| A | FR-A-2 423 681  (TOKICO)<br><br>--- | | |
| A | FR-A-2 149 872  (DAIMLER BENZ)<br><br>--- | | |
| A,D | GB-A-2 078 884  (TOYOTA)<br><br>----- | | |
| | | | TECHNICAL FIELDS SEARCHED (Int Cl 4)<br><br>F 16 D  55/00 |

The present search report has been drawn up for all claims

| Place of search | Date of completion of the search | Examiner |
|---|---|---|
| THE HAGUE | 23-01-1986 | HARTEVELD C.D.H. |